**Europäisches Patentamt**

**European Patent Office**

**Office européen des brevets**

(11) Publication number: **0 394 517 B1**

## EUROPEAN PATENT SPECIFICATION

(45) Date of publication of patent specification: **30.06.93** (51) Int. Cl.⁵: **G01C 21/22**

(21) Application number: **89107499.9**

(22) Date of filing: **25.04.89**

(54) Vehicle navigation system.

| | |
|---|---|
| (43) Date of publication of application:<br>**31.10.90 Bulletin 90/44** | (73) Proprietor: **ROBERT BOSCH GMBH**<br>**Postfach 30 02 20**<br>**W-7000 Stuttgart 30(DE)** |
| (45) Publication of the grant of the patent:<br>**30.06.93 Bulletin 93/26** | (72) Inventor: **Kässer, Jürgen, Dr. rer. nat.**<br>**Ahornweg 5**<br>**W-3201 Diekholzen 2(DE)** |
| (84) Designated Contracting States:<br>**DE FR GB** | |
| (56) References cited:<br>**EP-A- 0 181 012**<br>**EP-A- 0 261 404** | |

Rank Xerox (UK) Business Services
(3.10/3.6/3.3.1)

## Description

The present invention relates to navigation systems, and is particularly applicable to navigation systems for land vehicles. Navigation systems for use in shipping, air and space travel are well known and their benefit is indisputable. More recently, navigation systems for overland travel have met with increasing interest and homing systems for travel on motorways and city road systems have been proposed.

An electronic traffic pilot for motorists is described in an article in the German magazine "Funknavigation", issue no. 4 of 1983, entitled EVA - Ortungs-und Navigationsystems Fur Landfahrzeuge, by Ernst P. NeuKirchner, Otmar Pilsak, and Dietmar Schlogl. The basic system includes a driver communications system via which the starting point and destination are entered and direction recommendations issued; a route search system, which computes the optimum route, based on the starting point and destination entered, by accessing a digital illustration of the road system; a locating system which continuously updates the actual position during the journey and a navigation system, which makes a comparison of the set route and the actual route and, in the event of any disparity, causes the route search system to determine a new optimum route from the actual position. This last feature makes the homing always optimal, regardless of whether or not the directional recommendations are followed.

EP-A 181 012 describes an adaptive vehicle navigation system. Position locating devices in the vehicle determine the vehicle's position coordinates recurrently from the speed and acceleration of the vehicle in motion as determined by the measuring unit. The generated vehicle position coordinates are compared to an actual route position, which are repeated by coordinates of the route network which are stored in a mass memory. The coordinates of the route network determine all possible routes. For getting a good reproduction of the route many coordinates are necessary.

The known system requires a very large data handling capability and is hence complex and expensive to produce. In particular a large amount of memory space is required to store the data relating to the road system. This problem is alleviated to some extent by storing map data for different areas on magnetic tape in a cassette. The user then selects the cassette containing the appropriate map data for the journey to be made. However, a certain memory capacity is required to take data from the cassette tape for use in the system, and therefore it is desirable to be able to reproduce a map of the area to be travelled through from as little data as possible.

The present invention provides a method and an apparatus for determining the location of a vehicle as claimed. According to the invention each route is represented as a series of route sections, each of which is defined in terms of a set of coordinates and its curvature.

The set of coordinates may be the initial or final coordinates of the route section. As will become clear from the following description, this method of representing a route network requires far less data than, say representing each route as a series of coordinates only. It will be appreciated that the method is applicable to navigation systems other than that described above.

In accordance with the invention the curvature may be defined as the radius of each route section or the reciprocal of the radius.

In the known EVA navigation system, the locating system compensates for errors in the vehicle position sensors, using the stored information on the route network. Assuming that the vehicle remains in the route network (unless it departs entirely from the mapped area) it is possible to deduce the actual vehicle location by comparing the calculated position values to the possible values according to the stored route network information.

This error elimination can be greatly simplified if the route network is represented in the manner described above.

It is known to monitor the position of the vehicle using a compass and it is known to monitor the distances travelled by the inner and outer (right side and left side) wheels. The radius of curvature of any route section through which the vehicle travels can be calculated either from the compass direction or the wheel sensors, in a manner to be described below. The radius of curvature of successive route sections may be compared to the stored radius to accurately determine the actual vehicle position. Because this method of determining vehicle location is based on differential variables it is more accurate than known methods. For example, in a system which relies entirely on measurement of coordinates there will always be a certain navigation error. In conventional systems errors occur in particular on extended curves since the directional changes at the reference points do not coincide with the route followed by the road. (In a conventional system the road is represented as a series of coordinates linked by straight lines.) However a point of inflection (change in curvature) along a route can be determined precisely, and hence each time a vehicle is at such a point its position is known accurately.

2

An embodiment of the invention will now be described by way of example and with reference to the accompanying drawing in which:

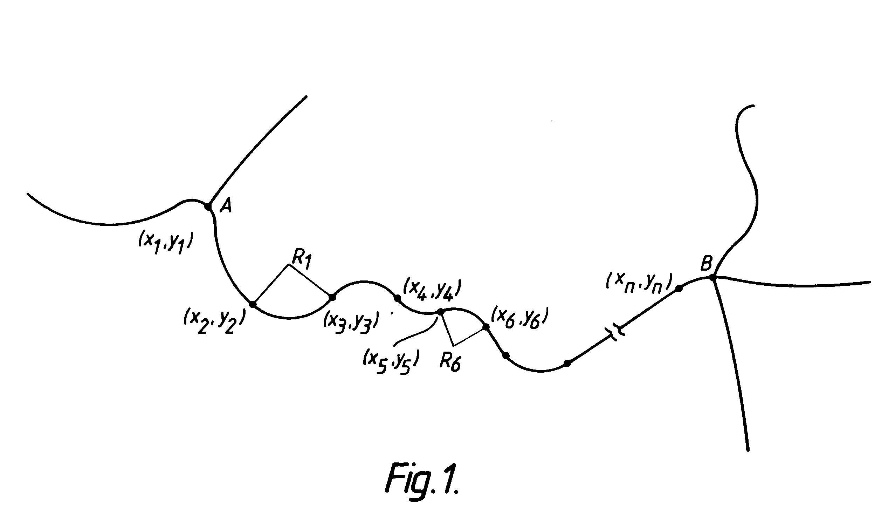

Figure 1 is a diagram illustrating the manner in which map data is stored according to this invention.

Referring to Figure 1, a length of road between two nodes A and B can be divided up into a number of arcs of a circle. It is possible to reconstruct a picture of that length of road given, for each individual arc, the initial coordinates (x,y) and the radius of curvature R. The coordinates of the beginning of one arc provide the end point for the previous arc. (A sign will be necessary for the radius R since there are two possible arcs of the same radius joining any two points).

In this embodiment of the present invention, lengths of road are stored in the system in this way. Thus, for each road section three factors are stored, namely initial coordinates (x,y) and radius (with sign). Alternatively the curvature $K = 1/R$ may be stored instead of the radius. This is more convenient in fact since curvature is always finite whereas the radius for a straight section is infinite.

The figure shows a set of coordinates at each change in the curvature of the route. If a route section of constant curvature completes a turn of more than 180° it is preferred to include at least one additional reference point and store the coordinates of this point.

The distance D between the two nodes can be calculated from the following formula:

$$D = 2 \sum_{arc_i} R_i \arcsin \frac{\sqrt{(x_{i+1} - x_i)^2 + (y_{i+1} - y_i)^2}}{2R_i}$$

In order to reduce the effort required for this calculation the lengths of the individual arcs may additionally be stored so that the road distance between two nodes is simply calculated from the sum of the lengths of the individual arcs.

During a journey, the position of a vehicle is monitored. In the known system described above the direction of travel of the vehicle relative to North is continuously monitored and pulse transmitters on the wheels provide information on the distance travelled. Any known method and apparatus for detecting the vehicle position can be used in the present invention. In the known navigation system, deviations between calculated and actual vehicle position occur due to various interfering influences. Such errors are compensated for by comparing the measured values of angle and position to the available values of angle and position from the stored road map. Assuming that the vehicle only travels within the stored road system, conclusions can be drawn on the actual position of the vehicle.

With road map data being stored in the manner described above the comparison of calculated vehicle positions and actual available positions within the road network is very simple. The radius of an arc or road section through which the vehicle is travelling can be obtained from the direction of travel of the vehicle (P) which may be monitored by a compass, and the speed (v) of the vehicle obtained for example from the speed monitor, using the formula:

$$R = v \left( \frac{dP}{dt} \right)^{-1} \quad or \quad R = \left( \frac{dP}{ds} \right)^{-1}$$

With s being the distance travelled.

Alternatively the radius can be calculated from the signals given by the wheel sensors, using the formula.

$$R = \frac{\Delta}{2} \frac{(S_1 + S_2)}{(S_1 - S_2)}$$

Where $\Delta$ is the wheel separation, $S_1$ and $S_2$ are the paths of the outer and inner wheels and R relates to the axle centre.

3

The radius can also be used for dead reckoning navigation, for example at a node or junction where a number of routes are available. The calculated values of vehicle position and radius of route section are compared to the stored values to determine which of the available directions the vehicle has taken.

The present invention is particularly useful for determining the location of a vehicle when it enters a mapped area from an unknown approach location. If the vehicle departs from a mapped area the sensors continue to monitor for example, the orientation of the vehicle and the distance travelled, so that the coordinates of the vehicle can always be calculated. However, because the calculated data is not continuously correlated with stored map data, errors build up so that by the time the vehicle re-enters the mapped area there is no precise information on the point of re-entry. The farther the vehicle travels outside the mapped area, the greater will be the error in the calculated location when the vehicle re-enters the mapped area.

The navigation error can be calculated from the distance travelled and used to define an area of possible locations of the vehicle. By correlating the measured arcs with the stored arcs possible in the range of dispersion, i.e. the defined area, a correlation maximum is obtained for the actual distance travelled whereby the location of the vehicle is determined.

One possibility for accumulating the measured data is to store the route curvatures for equidistant points along the route travelled, beginning from when the vehicle enters the mapped area, using the on board sensors and taking tolerances into account.

Starting from the radius at possible entry locations the stored arcs travelled are compared to the mapped arcs. Sections with very minor coincidence are eliminated and from the possible routes the one which corresponds most closely to the measured (stored) route is taken to be the actual route.

If very distinctive changes of direction occur during entry (i sections with small radius) the correlation can be arranged on the basis of these curvatures.

In conventional navigation systems it is known to use a compass and wheel sensors to complement each other since their error mechanisms are different (wheel sensors have good short-distance stability, a compass has good long-distance stability). This method can be easily applied to the present invention based on radii or curvature of route sections, because the curvature is directly available as a measured value. If, for example, the curvature provided by the compass is for a short time very much greater than that of the wheel sensors, there is presumably a magnetic interference and the wheel sensors are providing the correct valve. If, on the other hand, by integration of the angle increments

$$d \quad = \quad \frac{d(S_1 \quad - \quad S_2)}{\triangle}$$

a value is obtained which deviates from some time by a constant angle from the compass indication, the compass is correct.

To navigate a vehicle in accordance with the present invention it is not essential for radii or curvature valves to be continuously monitored outside a mapped area, and thus any conventional composite navigation method may be used outside the mapped area.

If a vehicle generally travels in regions for which a map is stored in accordance with the invention, it may be possible to dispense with the compass and rely on the wheel sensors alone. The reason for this is that unlike systems which utilise the direction of travel, which has to be obtained by integration of increments of changes in the direction of travel (summation of a systematic error) the measured valves provide the radius of curvature directly. Thus there is less likelihood of large errors occurring and less need to use the compass as well.

**Claims**

1. A method of determining the location of a vehicle in a route network,
   comprising the steps of: storing data representing available routes for the vehicle; monitoring the location of the vehicle by means of one or more sensors to provide calculated location data; and comparing the calculated location data with the stored location data to determine the actual location of the vehicle; characterised in that each available route is represented as a series of route sections each of which is defined in terms of a set of coordinates $(x_n, y_n)$ and its curvature $(R_1, R_6)$.

2. A method as claimed in claim 1 in which signals from the or each sensor are used to calculate the curvature $(R_1, R_6)$ route sections along which the vehicle travels and the calculated curvature values are compared to the stored curvature values to determine the actual location of the vehicle.

3. A method as claimed in claim 1 or 2 in which the orientation P of the vehicle as monitored and the radius of curvature of each route section R is determined using the formula

$$R = v \left( \frac{dP}{dt} \right)^{-1} \quad \text{or} \quad R = \left( \frac{dP}{ds} \right)^{-1}$$

where v is the speed of the vehicle and s is the distance travelled.

4. A method as claimed in claim 1 or 2 in which the paths of the outer and inner wheels of the vehicle are separately monitored and the radius of curvature R of each route section is determined from the formula

$$R = \frac{\Delta}{2} \frac{( S1 + S2 )}{( S1 - S2 )}$$

where $\Delta$ is the wheel separation and S1 and S2 are the paths of the right side and left side wheels respectively and R relates to the axle centre.

5. Apparatus for determining the location of a vehicle in a route network comprising:
   memory means storing data representing available routes for the vehicle, sensor means for monitoring the location of vehicle to provide calculated location data, and comparison means for comparing the calculated location data to the stored data to determine the actual location of the vehicle, characterised in that each available route is represented in the memory means as a series of route sections, each of which is defined in terms of a set of coordinates and its curvature.

6. Apparatus as claimed in claim 5 in which said sensor means continuously monitors the orientation of the vehicle in use, further comprising means for calculating, from signals provided by the sensor means, the curvatures of route sections through which the vehicle travels, said comparison means being arranged to compare the stored curvature values to the calculated curvature values to determine the actual location of the vehicle.

7. Apparatus as claimed in claim 5 in which in use said sensor means monitors the paths of the right side and left side wheels respectively, further comprising means for calculating, from signals provided by the sensor means, the curvatures of route sections through which the vehicle travels, said comparison means being arranged to compare the stored curvature values to the calculated curvature values to determine the actual location of the vehicle.

**Patentansprüche**

1. Verfahren zum Bestimmen der Lage eines Fahrzeugs in einem Streckennetz,
   umfassend als Schritte: Speichern von Daten, die für das Fahrzeug verfügbare Strecken darstellen; Überwachen der Lage des Fahrzeugs mit Hilfe von einem oder mehreren Sensoren, um berechnete Lagedaten zu gewinnen, und Vergleichen der berechneten Lagedaten mit den gespeicherten Lagedaten, um den tatsächlichen Ort des Fahrzeugs zu bestimmen, dadurch gekennzeichnet, daß jede verfügbare Strecke durch eine Reihe von Streckenabschnitten dargestellt wird, von denen jeder durch einen Satz Koordinaten ($x_n$, $y_n$) und seine Krümmung ($R_1$, $R_6$) definiert ist.

2. Verfahren nach Anspruch ist, bei dem Signale vom Sensor oder jedem Sensor zum Berechnen der Krümmung ($R_1$, $R_6$) von Streckenabschnitten, die das Fahrzeug befährt, benutzt werden, und Vergleich der berechneten Krümmungswerte mit den gespeicherten Krümmungswerten erfolgt, um die tatsächliche Lage des Fahrzeugs zu bestimmen.

**3.** Verfahren nach Anspruch 1 oder 2, bei dem die Orientierung P des Fahrzeugs überwacht wird und Bestimmung des Krümmungsradius jedes Streckenabschnitts R mit der Formel

$$R = v \ \frac{(dP)}{(dt)}^{-1} \quad \text{oder} \quad R = \frac{(dP)}{(ds)}^{-1}$$

erfolgt, wobei v die Geschwindigkeit des Fahrzeugs ist, s die Fahrtstrecke.

**4.** Verfahren nach Anspruch 1 oder 2, bei dem die Wege der äußeren und inneren Räder des Fahrzeugs gesondert überwacht werden und der Krümmungsradius R jedes Streckenabschnitts mit der Formel

$$R = \frac{\Delta}{2} \ \frac{(S_1 + S_2)}{(S_1 - S_2)}$$

bestimmt wird, wobei Δ der Radabstand ist, S1 und S2 die Wege der rechten und linken Räder sind und R sich auf das Achszentrum bezieht.

**5.** Vorrichtung zum Bestimmen der Lage eines Fahrzeugs in einem Streckennetz, umfassend:
Speichermittel zum Speichern von Daten, die für das Fahrzeug verfügbare Routen darstellen, Sensormittel zum Überwachen der Lage des Fahrzeugs, um berechnete Lagedaten zu gewinnen, und Vergleichsmittel zum Vergleichen der berechneten Lagedaten mit den gespeicherten Daten, um die tatsächliche Lage des Fahrzeugs zu bestimmen, dadurch gekennzeichnet, daß jede verfügbare Route in den Speichermitteln als eine Reihe von Streckenabschnitten dargestellt wird, von denen ein jeder durch einen Satz Koordinaten und seine Krümmung definiert ist.

**6.** Vorrichtung nach Anspruch 5, bei der die erwähnten Sensormittel die Orientierung des fahrenden Fahrzeugs fortlaufend überwachen, außerdem mit Mitteln zum Berechnen der Krümmungen von Streckenabschnitten, die das Fahrzeug befährt, aus durch die Sensormittel gelieferten Signalen, wobei die erwähnten Vergleichsmittel so gestaltet sind, daß sie die gespeicherten Krümmungswerte mit den berechneten Krümmungswerten vergleichen, um die tatsächliche Lage des Fahrzeugs zu bestimmen.

**7.** Vorrichtung nach Anspruch 5, in deren Betrieb die erwähnten Sensormittel die Wege der rechten und linken Räder überwachen, außerdem umfassend Mittel zum Berechnen der Krümmung von Streckenabschnitten, die das Fahrzeug befährt, aus von den Sensormitteln gelieferten Signalen, wobei die erwähnten Vergleichsmittel so gestaltet sind, daß sie die gespeicherten Krümmungswerte mit den berechneten Krümmungswerte vergleichen, um die tatsächliche Lage des Fahrzeugs zu bestimmen.

**Revendications**

**1.** Procédé pour déterminer la position d'un véhicule sur un réseau routier comprenant les étapes suivantes :
la mise en mémoire de données représentant les itinéraires possibles pour le véhicule, le contrôle de la position du véhicule au moyen d'un ou plusieurs capteurs servant à fournir les données calculées de position,
et la comparaison des données calculées de position aux données mises en mémoire de position pour déterminer la position réelle du véhicule,
procédé caractérisé en ce que sur chaque itinéraire disponible, on a représenté une série de sections d'itinéraires, chacune étant déterminée sous forme d'un peu de coordonnées (xn, yn) et de sa courbure (R1, R6).

**2.** Procédé tel que revendiqué dans la revendication 1, dans lequel les signaux provenant du capteur ou de chaque capteur sont utilisés pour calculer la courbure (R1, R6) des sections d'itinéraire que le véhicule parcourt et les valeurs calculées de la courbure sont comparées aux valeurs de la courbure mises en mémoire pour déterminer la position réelle du véhicule.

3. Procédé tel que revendiqué dans les revendications 1 ou 2 dans lequel l'orientation P du véhicule telle qu'elle est contrôlée et le rayon de courbure de chaque section d'itinéraire R est déterminé en utilisant la formule suivante :

$$R = v \left( \frac{dP}{dt} \right)^{-1} \quad \text{ou} \quad R = \left( \frac{dP}{ds} \right)^{-1}$$

dans laquelle v est la vitesse du véhicule et s est la distance parcourue.

4. Procédé tel que revendiqué dans les revendications 1 ou 2, dans lequel on contrôle séparément les trajets des roues extérieures et intérieures du véhicule sont contrôlés séparément et le rayon de courbure R de chaque section d'itinéraire est déterminé à partir de la formule suivante :

$$R = \frac{\Delta}{2} \frac{(S1 + S2)}{(S1 - S2)}$$

dans laquelle $\Delta$ est l'écart entre les roues et S1 et S2 sont les trajets respectivement des roues du côté droit et des roues du côté gauche et R se rapporte au centre de l'essieu.

5. Appareil pour déterminer la position d'un véhicule sur un réseau routier comprenant une mémoire enregistrant les données représentant les itinéraires disponibles pour le véhicule, des détecteurs pour contrôler la position du véhicule servant à fournir les données calculées de la position et des moyens pour comparer les données calculées de la position aux données mises en mémoire pour déterminer la position réelle du véhicule, appareil caractérisé en ce que chaque itinéraire disponible est représenté dans la mémoire sous forme d'une série de section d'itinéraires, chacune de ces sections étant définie par un jeu de coordonnées et sa courbure.

6. Appareil tel que revendiqué dans la revendication 5 dans lequel le capteur contrôle de façon continue l'orientation du véhicule utilisé, en outre comprenant des moyens pour calculer, à partir de signaux fournis par les capteurs, les courbes des sections d'itinéraire parcourues par le véhicule, les moyens de comparaison étant conçus pour comparer les valeurs de courbure mises en mémoire aux valeurs de courbure calculées pour déterminer la position réelle du véhicule.

7. Appareil tel que revendiqué dans la revendication 5, dans lequel le capteur en service contrôle respectivement les trajets des roues du côté droit et des roues du côté gauche, comprenant en outre des moyens pour calculer, à partir de signaux fournis par le capteur, les courbes des sections d'itinéraire parcourues par le véhicule, les moyens de comparaison étant disposés pour comparer les valeurs de courbure emmagasinées aux valeurs de courbure calculées pour déterminer la position réelle du véhicule.

Fig.1.